# EUROPEAN PATENT SPECIFICATION

(11) **EP 3 380 886 B1**
(45) Date of publication and mention of the grant of the patent: **15.06.2022**
(21) Application number: 16816491.1
(22) Date of filing: 23.11.2016
(51) Int. Cl.: G02B 27/01

(54) **DISPLAY SYSTEM ADJUSTABLE BASED ON THE BRIGHTNESS OF THE BACKGROUND**
ABHÄNGIG VON DER HELLIGKEIT DES HINTERGRUNDES EINSTELLBARES ANZEIGESYSTEM
SYSTÈME D'AFFICHAGE RÉGLABLE EN FONCTION DE LA LUMINOSITÉ DE L'ARRIÈRE-PLAN

(30) Priority: 25.11.2015 US 201514951618
(43) Date of publication of application: 03.10.2018
(73) Proprietor: Continental Automotive Systems, Inc., Auburn Hills MI 48326 (US)
(72) Inventor: BIRMAN, Vyacheslav, Auburn Hills, Michigan 48326 (US); BRUDZYNSKY, Daniel Arthur, West Bloomfield, MI 48324 (US)
(74) Representative: Continental Corporation
(86) International application number: PCT/US2016/063567
(87) International publication number: WO 2017/091712

(56) References cited:
- EP-A1- 0 570 037
- WO-A1-02/086591
- WO-A2-2008/109231
- US-A1- 2005 041 297
- US-A1- 2015 260 991
- US-A1- 2015 268 472

## Description

### BACKGROUND

### FIELD

The present disclosure relates to see-through displays, such as head-up displays (HUD), for presenting a virtual image to an occupant on a transparent or translucent surface.

### BACKGROUND

Modern vehicles typically include a see-through display, such as a head-up display, in a passenger cabin to communicate information to an operator of the vehicle. The information can include a vehicle condition such as a fuel level or velocity of the vehicle, as well as warning icons, known as tell-tales. Typical head-up displays project an image including the information onto a predetermined area of a display screen adjacent to a windshield or that is part of the windshield. A virtual image is formed that the driver sees projected out over the road or another object on the road outside of the vehicle.

If the outside area over which the image is projected is very bright, however, the head-up display is hard to see. Accordingly, there exists a need for a head-up display that is viewable over a variety of backgrounds, include very bright backgrounds. The document US 2015/260991 A1 discloses a head-up display system comprising a combiner configured to reflect rays of the generated image in a field of view of the occupant to create a virtual image, the combiner having at least one of a variable light transmission and a variable light reflection capability.

### SUMMARY

The present disclosure provides a see-through display system that adjusts the light transmission through the combiner based on the measured brightness of the background area of the virtual image. A main embodiment is defined in claim 1. Additional embodiments are defined in the dependent claims.

In one variation, which may be combined with or separate from the other variations described herein, a head-up display system is provided that includes an image generator configured to emit a generated image for viewing by a vehicle occupant. The system also includes a combiner that is configured to reflect rays of the generated image in a field of view of the occupant to create a virtual image. The combiner has a variable light reflection capability. In addition, or in the alternative, the combiner may have a variable light transmission capability. A light sensor assembly is electrically coupled to the combiner. The light sensor assembly includes a light sensor configured to measure brightness and a light sensor housing having portions configured to partially restrict light from reaching the light sensor. The light sensor housing defines an aperture therethrough to allow some light to reach the light sensor. A controller is configured to interpret the brightness measured by the light sensor and adjust the amount of light transmitted through and/or reflected by the combiner based on the brightness.

In another variation, which may be combined with or separate from the other variations described herein, a head-up display system is provided that includes an image generator configured to emit a generated image for viewing by a vehicle occupant. The system also includes a combiner configured to reflect rays of the generated image in a field of view of the occupant to create a virtual image. The combiner has a variable light reflection capability. In addition, or in the alternative, the combiner may have a variable light transmission capability. A light sensor assembly is electrically coupled to the combiner. The light sensor assembly is configured to measure brightness in the field of view and to substantially refrain from measuring brightness outside of the field of view. A controller is configured to interpret the brightness measured by the light sensor and adjust the amount of light reflected by and/or transmitted through the combiner based on the brightness.

In yet another variation, which may be combined with or separate from the other variations described herein, a see-through display system is provided that includes an image generator configured to emit a generated image for viewing by a vehicle occupant. The system also includes a combiner configured to reflect rays of the generated image in a field of view of the occupant to create a virtual image. The combiner has a variable light reflection and/or transmission capability. A light sensor assembly is electrically coupled to the combiner. The light sensor assembly is configured to measure brightness in the field of view and to substantially refrain from measuring brightness outside of the field of view. A controller is configured to interpret the brightness measured by the light sensor and adjust the amount of light reflected by and/or transmitted through the combiner based on the brightness.

In still another variation, which may be combined with or separate from the other variations described herein, a see-through display system is provided that includes an image generator configured to emit a generated image for viewing by a vehicle occupant. A combiner is configured to reflect rays of the generated image in a field of view of the occupant to create a virtual image. The combiner has a variable light reflection and/or transmission capability. A light sensor assembly is electrically coupled to the combiner. The light sensor assembly is configured to measure brightness in the field of view. A controller is configured to interpret the brightness measured by the light sensor and adjust the amount of light reflected by and/or transmitted through the combiner based on the brightness. The controller is configured to apply a voltage to the combiner to affect the amount of light that is reflected by and/or transmitted through the combiner. The controller is configured to apply the voltage at a first constant level to provide a first level of light reflection and/or transmission through the combiner in a first mode, and the controller is configured to apply the voltage at a second constant level to provide a second level of light reflection and/or transmission through the combiner in a second mode.

Although the different examples have the specific components shown in the illustrations, embodiments of this disclosure are not limited to those particular combinations. It is possible to use some of the components or features from one of the examples in combination with features or components from another one of the examples.

The various features and advantages of this disclosure will become apparent to those skilled in the art from the following detailed description. The drawings that accompany the detailed description can be briefly described as follows.

### DRAWINGS

Examples are reflected in the drawings, which will be described below. The drawings described herein are for illustration purposes only and are not intended to limit the scope of the present disclosure in any way.
FIG. 1 is a schematic side-view of a vehicle including an example see-through display system, in accordance with the principles of the present disclosure;
FIG. 2A is a schematic view of a portion of the see-through display system of FIG. 1 including a light sensor assembly and a background area behind a virtual image, according to the principles of the present disclosure;
FIG. 2B is a schematic side view of a portion of the see-through display system of FIGS. 1-2A including details of the light sensor assembly, in accordance with the principles of the present disclosure;
FIG. 3A is a plot of voltage versus time being applied in the see-through display system of FIGS. 1-2B over a light background, in accordance with the principles of the present disclosure;
FIG. 3B is a plot of voltage versus time being applied in the see-through display system of FIGS. 1-2B over a dark background, according to the principles of the present disclosure;
FIG. 4A is a schematic view of a portion of the see-through display system of FIGS. 1-2B showing a clear combiner and a dark background, in accordance with the principles of the present disclosure;
FIG. 4B is a schematic view of a portion of the see-through display system of FIGS. 1-2B and 4A showing a translucent combiner reflecting a larger number of rays than in FIG. 4A, and a light background, according to the principles of the present disclosure;
FIG. 5 is a schematic view of a portion of the see-through display system of FIGS. 1-2B and 4A-4B showing a dark background and a clear combiner, in accordance with the principles of the present disclosure;
FIG. 6A is a schematic view of a portion of the see-through display system of FIGS. 1-2B and 4A-5 showing a light snowy background and a clear combiner, according to the principles of the present invention;
FIG. 6B is a schematic view of a portion of the see-through display system of FIGS. 1-2B and 4A-6A showing a light snowy background and a translucent combiner reflecting a larger number of rays than in FIG. 6A, according to the principles of the present invention;
FIG. 7A is a schematic view of a portion of the see-through display system of FIGS. 1-2B and 4A-6B showing a white truck background and a clear combiner, according to the principles of the present invention; and
FIG. 7B is a schematic view of a portion of the see-through display system of FIGS. 1-2B and 4A-7A showing a white truck background and a translucent combiner reflecting a larger number of rays than in FIG. 7A, according to the principles of the present invention.

### DESCRIPTION

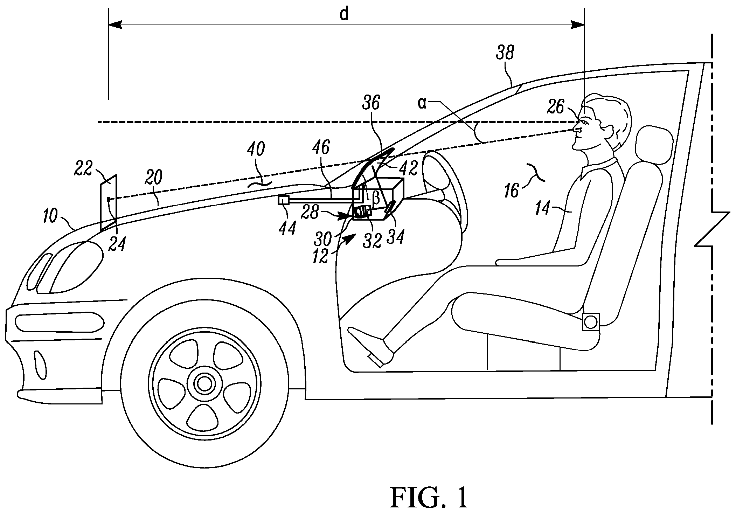

Figure 1 schematically illustrates a vehicle 10 that has a see-through display system, which can be head-up display (HUD) system 12, or any other type of see-through display system. For example, the see-through display system of vehicle 10 can be any type of system that desires contrast control, such as a night vision system, a medical imaging display system, a land-based HUD or helmet mounted display (HMD), or an aircraft HUD or HMD.

In the illustrated example, a HUD system 12 provides information or content to an occupant 14 of the vehicle 10. The HUD system 12 can be positioned, for example, within a passenger cabin 16 of the vehicle 10, and in some examples, in front of a steering wheel 18. The HUD system 12 is operable to display information or context in the form of one or more images or elements of graphics. For instance, the content can include one or more conditions of the vehicle 10, such as fuel level, battery level, odometer readings, velocity or a warning. In other examples, the HUD system 12 is a multimedia device operable to display content in the form of navigational data, imagery, radio data or a menu for interacting with another system of the vehicle 10 or another system located remotely from the vehicle 10. However, other content is contemplated.

The HUD system 12 can be in electrical communication, being wired or wirelessly, with another digital system onboard the vehicle 10, such as a backup guidance camera or a vehicle controller operable to perform various system tasks. In other examples, the head-up display system 12 displays information from a remote system, such as information based on a location of the vehicle 10 including an advertisement provided by a commercial entity. The HUD system 12 can also be a stand-alone system. Other systems may benefit from the teachings herein, including other ground-based systems, aircraft systems, handheld mobile devices and other devices that express, show, and/or present information. In some examples, the HUD system 12 is operable to replicate or mirror the display contents of a computing device such as a mobile device or a smartphone.

The HUD system 12 shows information in the line of sight 20 of the vehicle occupant 14. Thus, the HUD system 12 is operable to project a virtual image 22 in the line of sight 20 of the occupant 14, at a point 24 outside the vehicle, so that that occupant 14 (where the occupant 14 may be the driver) does not need to take his or her eyes off of the road. The virtual image 22 may be projected about two meters in front of the occupant 14, by way of example. Thus, the occupant 14 gets all of the important information such as speed, warning signals, etc., without having to look away from the line of sight 20, and therefore, safety is improved. Such placement of the virtual image 22 at point 24 outside of the vehicle 10 allows for the feeling of an augmented reality, where the virtual image 22 appears to be a part of the driving situation itself. Thus, the point 24 is located a desired distance d from the occupant 14 and at a look-down angle α from the eyes 26 of the occupant 14.

The HUD system 12 includes an image generator 28 configured to emit a generated image for eventual viewing by the vehicle occupant 14 in the form of the virtual image 22. The image generator 28 may include a light source 30 and a display 32 to project the generated image, by way of example. The generated image may be projected to a planar or aspherical fold mirror 34, which reflects rays of the generated image toward a combiner 36. In some variations, the fold mirror 34 may be omitted and the image generator 28 may project the image directly to the combiner 36.

The combiner 36 may be provided as a curved see-through mirror or plate through which the occupant 14 can see through to the windshield 38 and the road. In other cases, the combiner 36 may be flat, rather than curved. The combiner 36 may be oriented at an angle β with respect to a horizontal center line of the vehicle 10, by way of example, and this angle β may be adjustable in some variations to accommodate the heights of different occupants 14. The combiner 36 is configured to reflect rays of the generated image in a field of view 40 of the occupant 14 to create the virtual image 22. Though the generated image is reflected by the combiner 36 toward the occupant 14, the occupant 14 sees the image as a virtual image 22 that appears to be outside of the vehicle 10 behind the front surface 42 of the combiner 36. The occupant 14 looks through the combiner 36 and the windshield 38 along the line of sight 20 to the see the virtual image 22, which appears to be generated in front of the windshield 38 outside of the vehicle 10. As explained above, in some variations, the combiner 36 may be rotated to accommodate occupants 14 having different heights.

The combiner 36 has a variable light reflection capability. In some variations, the combiner 36 may additionally or alternatively have a variable light transmission capability. In other words, the combiner 36 itself may be adjusted to have varying levels of tint or be transparent, based on adjusting the amount of light reflection by the combiner 36 and/or the light transmission through the combiner 36. Thus, the level of translucency of the combiner 36 may be adjusted from transparent or nearly transparent to nearly opaque. The combiner 36, therefore, may have variable reflection in that it may be adjusted to reflect more or less light. A controller shown schematically at 44 is used to adjust the amount of light that is reflected by and/or transmitted through the combiner 36, and/or to tint or change the translucency of the combiner 36.

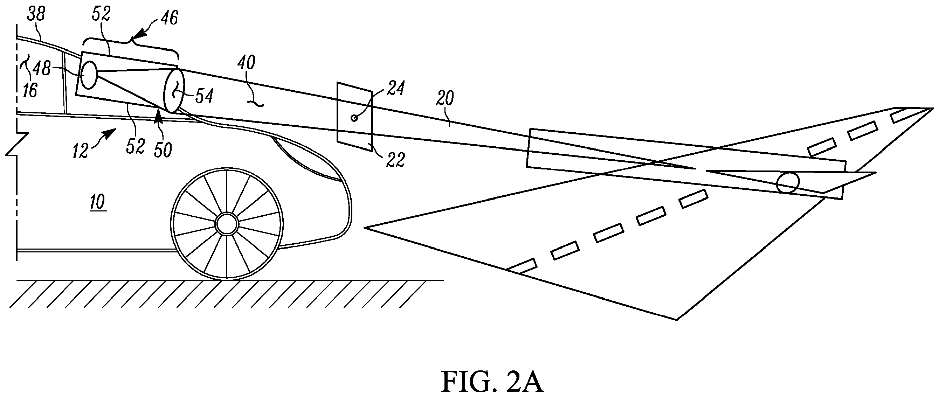

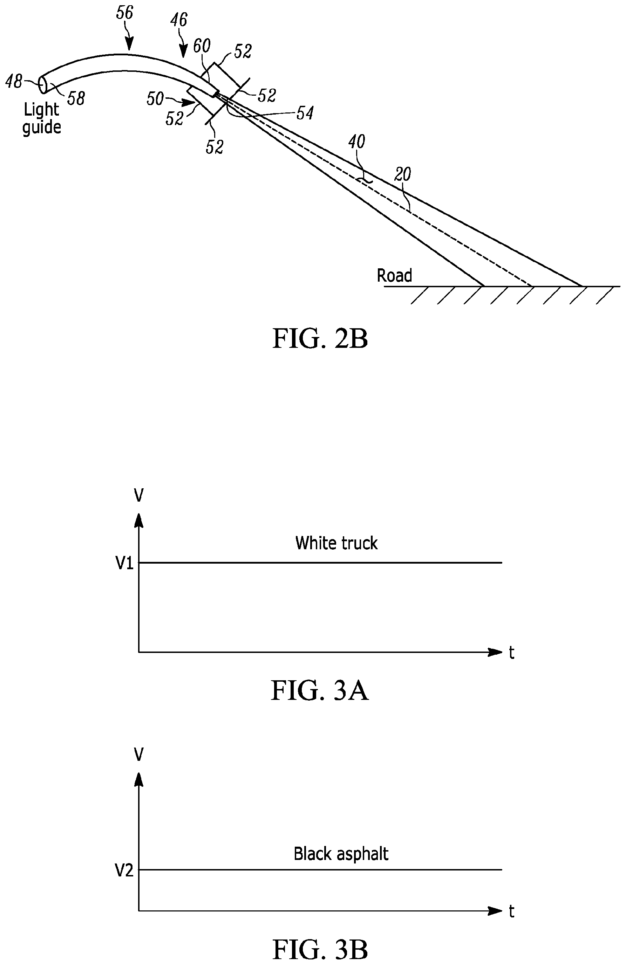

Referring to FIGS. 1, 2A, and 2B, a light sensor assembly 46 is electrically coupled to the combiner 36 through the controller 44. The light sensor assembly 46 is shown schematically enlarged for purposes of illustration. The light sensor assembly 46 may include a light sensor 48 configured to measure brightness and a light sensor housing 50. The light sensor 48 may be of any suitable type, such as a photodiode or photomultiplier, by way of example. The light sensor housing 50 has blocking portions 52 configured to partially restrict light from reaching the light sensor 48. The light sensor housing 50, however, defines an aperture 54 therethrough to allow some light to reach the light sensor 48. Accordingly, the light sensor assembly 46 is configured to sense light that is located in the field of view of the occupant 14 and that is located directly behind the virtual image 22, in a focal range behind the virtual image 22 that may be any distance, however long, behind the virtual image 22. Thus, the blocking portions 52 of the light sensor housing 50 are disposed so as to prevent the light sensor 48 from measuring light substantially outside of the field of view, and the light sensor assembly 46 is configured to cause the light sensor 48 to measure brightness directly behind the virtual image 22 from a viewpoint of the occupant 14. The light sensor assembly 46 is configured to measure brightness in the field of view 40 and to substantially refrain from measuring brightness outside of the field of view 40.

In some variations, such as that shown in FIG. 2B, the light sensor assembly 46 includes light guide 56. The light guide 56 has the light sensor 48 attached to a back end 58 of the light guide 56, and the light housing 50 attached to a front end 60 of the light guide 56. The front end 60 is located in the light housing 50 and is configured to receive light that enters the light housing 50 through the aperture 54. The light guide 56 is configured to transmit light received through the front end 60 to the light sensor 48 located at the back end 58.

The controller 44 is configured to interpret the brightness measured by the light sensor 48 and adjust the amount of light reflected by and/or transmitted through the combiner 36, based on the brightness measured. In some variations, the combiner 36 may comprise electro-chromatic materials, such as an electro-chromatic material layer, that allows the tint or level of translucency of the combiner 36 to be adjusted electronically. Decreasing the light transmission of the combiner 36, and/or increasing the light reflection by the combiner 36, reduces the external brightness visible to the occupant 14.

The controller 44 applies a voltage to the combiner 36 to affect the amount of light that is reflected by and/or transmitted through the combiner 36. Referring to FIG. 3A, a plot of applied voltage V versus time t is provided. A first level of voltage V1 is applied by the controller 44 to increase the reflection characteristics of the combiner 36. The applied voltage may also or alternatively decrease the light transmission through the combiner 36. Such increase in light reflection and/or decrease in light transmission may have the visual effect of adding a "tint" to the combiner 36, or to provide a degree of opacity to the combiner 36 so that the combiner 36 is not transparent, and to increase brightness of the image 22. In this example, V1 is not equal to zero. The voltage V1 is applied at a first constant level to provide a first level of light reflection by and/or transmission through the combiner 36 in a first mode.

Referring to FIG. 3B, another plot of applied voltage V versus time t is provided. In FIG. 3B, a second level of voltage V2 is applied by the controller 44, which is lower than the voltage level V1. In some examples, V2 may be equal to zero. The voltage V2 is applied at a second constant level to provide a second level of light reflection by and/or transmission through the combiner 36 in a second mode. When the controller 44 applies the voltage level V2, the combiner 36 appears more transparent than the combiner 36 appears when the voltage level V1 is applied. More light is transmitted through the combiner 36 and/or less light is reflected by the combiner 36 when the voltage V2 is applied than when the voltage V1 is applied. In some examples, the combiner 36 may be completely transparent at certain or no voltage levels. The voltage V2 is applied at a second constant level to provide a second level of light reflection by and/or transmission through the combiner 36 in a second mode.

The controller 44 is configured to cause the combiner 36 to provide a first background image based on a first level of light reflection and/or transmission when the brightness equals or exceeds a predetermined threshold, and the controller 44 is configured to cause the combiner 36 to provide a second background image based on a second level of light reflection and/or transmission when the brightness is less than the predetermined threshold, the first background image being darker than the second background image. In other words, the combiner 36 has varying levels of light reflection and/or varying levels of light transmission that can be allowed through it to provide background images having varying levels of darkness. In this example, the greater the voltage level V that is applied, the darker that the combiner 36 will appear. In this example, the voltage V falls and rises in a constant matter without being pulse-width-modulated, or without applying a pulse-width modulated signal.

The controller 44 is configured to interpret the brightness measured by the light sensor 48 and adjust the amount of light reflected by and/or transmitted through the combiner 36, based on the brightness measured. Since the light housing 50 restricts the light measured by the light sensor 48 to light that is substantially in the line of sight 20, in the field of view 40 of the occupant 14, the brightness that is measured by the light sensor 48 is the brightness directly behind the virtual image 22 from the point of view of the occupant 14. Therefore, when the virtual image 22 is displayed over a very bright background, the controller 44 is configured to cause the combiner 36 to reflect more light and/or to transmit less light and provide a dark background for the occupant 14; that way, the occupant 14 will be able to see the virtual image 22, and the virtual image 22 will not be washed out due to the bright background.

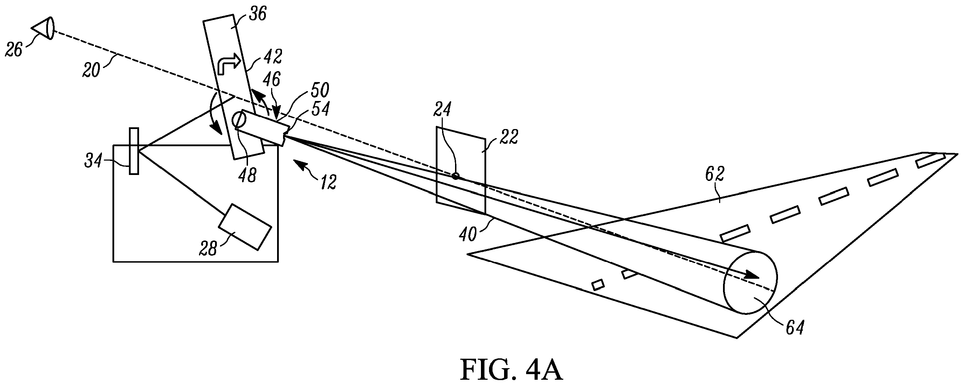

For example, referring to FIG. 4A, the virtual image 22 is disposed in the line of sight 20 over an asphalt road 62, which provides a fairly dark background 64 behind the virtual image 22. The light sensor assembly 46 measures the light in the field of view 40, and because the background 64 is in the field of view 40 and the background 64 is dark, a low level of brightness is measured. The brightness measured is below a threshold, so the controller 44 causes the combiner 36 to provide a high level of light transmission and/or a low level of light reflection, and in other words, the combiner 36 appears transparent or nearly transparent. Therefore, the occupant 14 will see the light from the virtual image 22 over the dark background 64, and the lighted elements of the image 22 will be viewable.

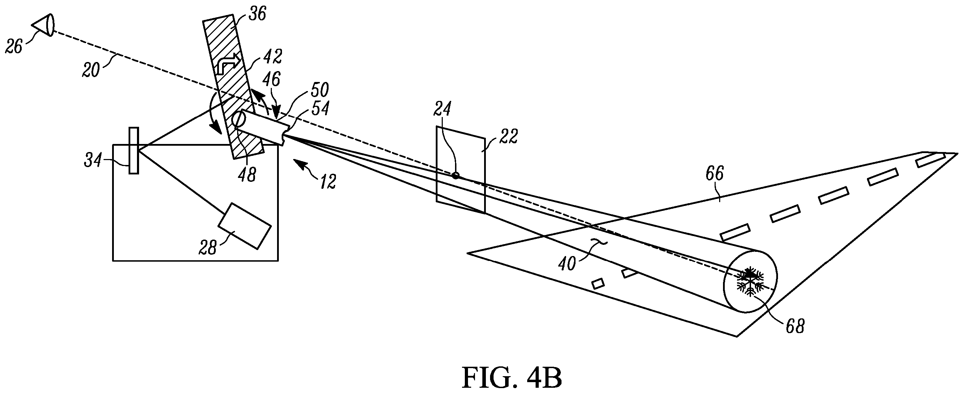

Referring now to FIG. 4B, the virtual image 22 is disposed in the line of sight 20 over a snow-covered road 66, which provides a light or white background 68 behind the virtual image 22. The light sensor assembly 46 measures the light in the field of view 40, and because the background 68 is in the field of view 40 and is white, a high level of brightness is measured. The brightness measured is above a threshold, so the controller 44 causes the combiner 36 to provide a low level of light transmission and/or a high level of light reflection, and in other words, the combiner 36 is caused to appear tinted, not transparent, and may have a translucent tinted look or may appear even close to opaque. Therefore, the occupant 14 will see the light from the virtual image 22 over a new dark background provided by the combiner 36, even thought the actual background 68 is white. Since the combiner 36 provides a dark background, the lighted elements of the virtual image 22 will be viewable and will not be washed out by the high brightness of the road 66 and background area 68.

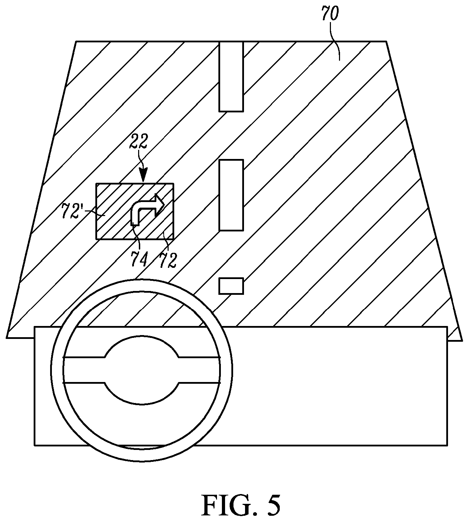

Referring now to FIGS. 5, 6A, 6B, 7A, and 7B, examples of the virtual image 22 are shown in various scenarios. In FIG. 5, the background is an asphalt road 70, which is dark. Therefore, the virtual image 22 has a dark background 72 directly behind it in the field of view, and the lighted symbol 74 shown in the virtual image 22 would be viewable over the dark background 72 without decreasing the light transmission through the combiner 36 or increasing the light reflection by the combiner 36, as explained above. However, in this example, the light transmission of the combiner has been slightly decreased, and/or the light reflection by the combiner has been slightly increased, so that the background 72' provided by the combiner appears slightly darker than the road 70 to provide a greater amount of contrast between the lighted symbol 74 and the background 72' than would be present if the combiner were merely transparent and the background 72 were seen as simply the asphalt road 70.

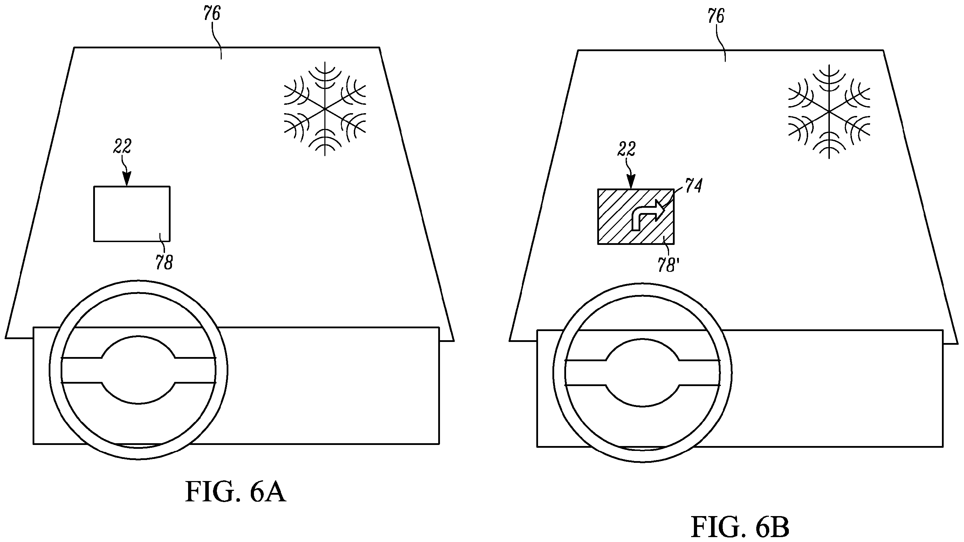

In FIG. 6A, the background is a snow-covered road 76, which is white. The combiner 36 is shown as being transparent, prior to any voltage being applied to the combiner 36 by the controller 44 (see FIG. 1 for reference numbers). Therefore, the virtual image 22 is washed out and no lighted symbols or information are present because such bright symbols are not visible or not easily visible over the white background 78. Referring now to FIG. 6B, the controller has now adjusted the translucency level of the combiner based on the high level of brightness measured, and the combiner now provides a dark tinted background 78' over the snow-covered road 76. Therefore, the virtual image 22 now has a dark background 78', and the lighted symbol 74 shown in the virtual image 22 is viewable over the dark background 78'.

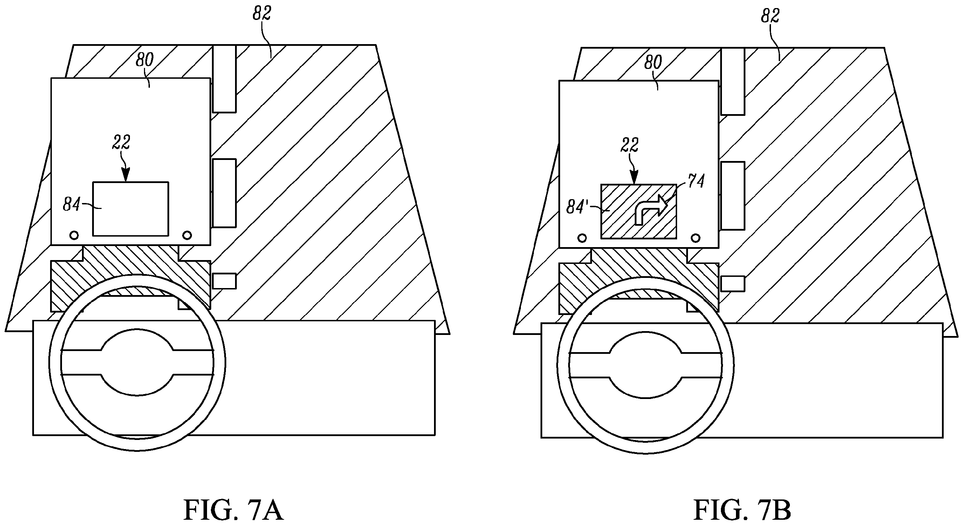

In FIG. 7A, the background is a white truck 80 driving down an asphalt road 82. The combiner 36 is shown as being transparent, prior to any voltage being applied to the combiner 36 by the controller 44 (see FIG. 1 for reference numbers). The white truck 80 provides the background 84 that is in the field of view of the occupant, directly behind virtual image 22 in the line of sight. Therefore, the virtual image 22 is washed out and no lighted symbols or information are present because such bright symbols are not visible or not easily visible over the background 84 over the white truck 80.

As explained above, the light sensor assembly measures the light along the line of sight and/or in the field of view. Thus, in this case, the light sensor assembly 46 will provide a high level of measured brightness to the controller, due to the white truck 80 being in the field of view. Referring now to FIG. 7B, the controller will then adjust the translucency level of the combiner based on the high level of brightness measured, and the combiner then provides the appearance of a dark tinted background 84' over the white truck 80. Therefore, the virtual image 22 now has a dark background 84', and the lighted symbol 74 shown in the virtual image 22 is viewable over the dark background 84'.

The controller 44 may include a processor, a memory and an interface. The processor may, for example only, be any type of known microprocessor having desired performance characteristics. The memory may, for example only, includes UVPROM, EEPROM, FLASH, RAM, ROM, DVD, CD, a hard drive, or other computer readable medium which may store data and the algorithm for operating the light transmission level of the combiner and of the head-up display system 12 as described herein. The interface facilitates communication with the other systems or components of the vehicle 10. In some examples, the controller 44 may be a portion of the vehicle control system, another system, or a stand-alone system.

Although the different examples have a specific component shown in the illustrations, embodiments of this disclosure are not limited to those particular combinations. It is possible to use some of the components or features from one of the examples in combination with features or components from another one of the examples. Also, although particular step sequences are shown, described, and claimed, it should be understood that steps may be performed in any order, separated or combined unless otherwise indicated and will still benefit from the present disclosure.

Furthermore, the foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A head-up display system (12) comprising:
an image generator (28) configured to emit a generated image for viewing by a vehicle occupant;
a combiner (36) configured to reflect the generated image in a field of view of the occupant to create a virtual image, the combiner having variable light reflection capability;
a light sensor assembly (46) comprising a light sensor (48) and a light sensor housing (50) with light blocking portions (52) disposed so as to prevent the light sensor (48) from measuring light substantially outside of the field of view, and being electrically coupled to the combiner, the light sensor assembly configured to measure brightness in the field of view and to substantially refrain from measuring brightness outside of the field of view; and
a controller (44) configured to interpret the brightness measured by the light sensor and adjust the amount of light reflected by the combiner based on the brightness measured by the light sensor, **characterized in that** the controller is configured to apply a voltage (V1) at a first constant level to cause the combiner to provide a first background image based on a first level of light reflection when the brightness equals or exceeds a predetermined threshold, the controller being configured to apply a voltage (V2) at a second constant level to cause the combiner to provide a second background image based on a second level of light reflection when the brightness is less than the predetermined threshold, the first background image being darker than the second background image.

2. The head-up display system of claim 1, wherein the blocking portions of the light sensor housing are disposed so as to prevent the light sensor from measuring light substantially outside of the field of view, wherein the light sensor is configured to measure brightness directly behind the virtual image from a viewpoint of the occupant.

3. The head-up display system of claim 2, wherein the combiner comprises an electro-chromatic material layer.

4. The head-up display system of claim 3, wherein the controller is configured to apply a voltage to the combiner to affect the amount of light that is reflected by the combiner.

5. The head-up display system of claim 1, the light sensor assembly further comprising a light guide, the light sensor being attached to a first end of the light guide and the light sensor housing being attached to a second end of the light guide.

6. The head-up display system of claim 5, wherein the controller is configured to apply the voltage at a first constant level to provide the first level of light reflection by the combiner in a first mode, and wherein the controller is configured to apply the voltage at a second constant level to provide the second level of light reflection by the combiner in a second mode.

7. The head-up display system of claim 1, wherein the light sensor housing defines an aperture therethrough to allow some light to reach the light sensor.

8. The head-up display system of claim 7, wherein the light sensor housing allows the light sensor to measure brightness directly behind the virtual image from a viewpoint of the occupant, and wherein the combiner comprises electro-chromatic materials.

9. The head-up display system of claim 8, wherein the controller is configured to apply a voltage to the combiner to affect the amount of light that is reflected by the combiner.

## Patentansprüche

1. Frontscheibenanzeigesystem (12), aufweisend:
einen Bildgenerator (28), der ausgebildet ist, um ein generiertes Bild zur Betrachtung durch einen Fahrzeuginsassen zu emittieren;
einen Kombinierer (36), der ausgebildet ist, um das generierte Bild in ein Blickfeld des Insassen zu reflektieren, um ein virtuelles Bild zu erzeugen, wobei der Kombinierer variable Lichtreflexionsfähigkeit hat;
eine Lichtsensoranordnung (46), aufweisend einen Lichtsensor (48) und ein Lichtsensorgehäuse (50) mit Licht blockierenden Anteilen (52), die so angeordnet sind, dass der Lichtsensor (48) daran gehindert wird, Licht im Wesentlichen außerhalb des Blickfelds zu messen, und elektrisch an den Kombinierer gekoppelt ist, wobei die Lichtsensoranordnung ausgebildet ist, um die Helligkeit in dem Sichtfeld zu messen und im Wesentlichen das Messen der Helligkeit außerhalb des Blickfelds zu unterlassen; und
eine Steuereinheit (44), die ausgebildet ist, um die durch den Lichtsensor gemessene Helligkeit zu interpretieren und die durch den Kombinierer reflektierte Lichtmenge basierend auf der durch den Lichtsensor gemessen Helligkeit anzupassen;
**dadurch gekennzeichnet, dass**
die Steuereinheit ausgebildet ist, um eine Spannung (V1) mit einem ersten konstanten Niveau anzulegen, um zu bewirken, dass der Kombinierer basierend auf einem ersten Niveau der Lichtreflexion, wenn die Helligkeit gleich einem vorgegebenen Schwellenwert ist oder diesen überschreitet, ein erstes Hintergrundbild bereitstellt, die Steuereinheit ausgebildet ist, um eine Spannung (V2) mit einem zweiten konstanten Niveau anzulegen, um zu bewirken, dass der Kombinierer ein zweites Hintergrundbild basierend auf einem zweiten Niveau der Lichtreflexion bereitstellt, wenn die Helligkeit kleiner als der vorgegebene Schwellenwert ist, wobei das erste Hintergrundbild dunkler als das zweite Hintergrundbild ist.

2. Frontscheibenanzeigesystem nach Anspruch 1, wobei die blockierenden Anteile des Lichtsensorgehäuses so angeordnet sind, dass der Lichtsensor daran gehindert wird, Licht im Wesentlichen außerhalb des Blickfelds zu messen, wenn der Lichtsensor ausgebildet ist, um die Helligkeit direkt hinter dem virtuellen Bild von einem Blickpunkt des Insassen zu messen.

3. Frontscheibenanzeigesystem nach Anspruch 2, wobei der Kombinierer eine elektrochromatische Materialschicht aufweist.

4. Frontscheibenanzeigesystem nach Anspruch 3, wobei die Steuereinheit ausgebildet ist, um eine Spannung an den Kombinierer anzulegen, um die Lichtmenge zu beeinflussen, die von dem Kombinierer reflektiert wird.

5. Frontscheibenanzeigesystem nach Anspruch 1, wobei die Lichtsensoranordnung des Weiteren eine Lichtführung aufweist, wobei der Lichtsensor an einem ersten Ende der Lichtführung befestigt ist und das Lichtsensorgehäuse an einem zweiten Ende der Lichtführung befestigt ist.

6. Frontscheibenanzeigesystem nach Anspruch 5, wobei die Steuereinheit ausgebildet ist, um die Spannung mit einem ersten konstanten Niveau anzulegen, um das erste Niveau der Lichtreflexion durch den Kombinierer in einem ersten Modus bereitzustellen, und wobei die Steuereinheit ausgebildet ist, um die Spannung mit einem zweiten konstanten Niveau anzulegen, um das zweite Niveau der Lichtreflexion durch den Kombinierer in einem zweiten Modus bereitzustellen.

7. Frontscheibenanzeigesystem nach Anspruch 1, wobei das Lichtsensorgehäuse eine Öffnung dadurch definiert, um zu ermöglichen, dass etwas Licht den Lichtsensor erreicht.

8. Frontscheibenanzeigesystem nach Anspruch 7, wobei das Lichtsensorgehäuse ermöglicht, dass der Lichtsensor Helligkeit direkt hinter dem virtuellen Bild von einem Blickpunkt des Insassen misst, und wobei der Kombinierer elektrochromatische Materialien aufweist.

9. Frontscheibenanzeigesystem nach Anspruch 8, wobei die Steuereinheit ausgebildet ist, um eine Spannung an den Kombinierer anzulegen, um die Lichtmenge zu beeinflussen, die von dem Kombinierer reflektiert wird.

## Revendications

1. Système d'affichage tête haute (12) comprenant :
un générateur d'images (28) configuré pour émettre une image générée destinée à être vue par un occupant du véhicule ;
un combineur (36) configuré pour réfléchir l'image générée dans un champ de vision de l'occupant pour créer une image virtuelle, le combineur ayant une capacité de réflexion de la lumière variable ;
un ensemble de capteur de lumière (46) comprenant un capteur de lumière (48) et
un boîtier de capteur de lumière (50) avec des parties de blocage de lumière (52) disposées de manière à empêcher le capteur de lumière (48) de mesurer la lumière sensiblement à l'extérieur du champ de vision, et étant couplé électriquement au combineur, l'ensemble de capteur de lumière étant configuré pour mesurer la luminosité dans le champ de vision et pour s'abstenir sensiblement de mesurer la luminosité à l'extérieur du champ de vision ; et
un contrôleur (44) configuré pour interpréter la luminosité mesurée par le capteur de lumière et ajuster la quantité de lumière réfléchie par le combineur sur la base de la luminosité mesurée par le capteur de lumière, **caractérisé en ce que** le contrôleur est configuré pour appliquer une tension (V1) à un premier niveau constant pour amener le combineur à fournir une première image d'arrière-plan sur la base d'un premier niveau de réflexion de la lumière lorsque la luminosité est égale ou supérieure à un seuil prédéterminé, le contrôleur étant configuré pour appliquer une tension (V2) à un second niveau constant pour amener le combineur à fournir une seconde image d'arrière-plan basée sur un second niveau de réflexion de la lumière lorsque la luminosité est inférieure au seuil prédéterminé, la première image d'arrière-plan étant plus sombre que la seconde image d'arrière-plan.

2. Système d'affichage tête haute selon la revendication 1, dans lequel les parties de blocage du boîtier du capteur de lumière sont disposées de manière à empêcher le capteur de lumière de mesurer la lumière située sensiblement en dehors du champ de vision, où le capteur de lumière est configuré pour mesurer la luminosité directement derrière l'image virtuelle depuis un point de vue de l'occupant.

3. Système d'affichage tête haute selon la revendication 2, dans lequel le combineur comprend une couche de matériau électro-chromatique.

4. Système d'affichage tête haute selon la revendication 3, dans lequel le contrôleur est configuré pour appliquer une tension au combineur pour affecter la quantité de lumière qui est réfléchie par le combineur.

5. Système d'affichage tête haute selon la revendication 1, l'ensemble de capteur de lumière comprenant en outre un guide de lumière, le capteur de lumière étant fixé à une première extrémité du guide de lumière, et le boîtier du capteur de lumière étant fixé à une seconde extrémité du guide de lumière.

6. Système d'affichage tête haute selon la revendication 5, dans lequel le contrôleur est configuré pour appliquer la tension à un premier niveau constant pour fournir le premier niveau de réflexion de la lumière par le combineur dans un premier mode, et où le contrôleur est configuré pour appliquer la tension à un second niveau constant pour fournir le second niveau de réflexion de la lumière par le combineur dans un second mode.

7. Système d'affichage tête haute selon la revendication 1, dans lequel le boîtier du capteur de lumière définit une ouverture à travers celui-ci pour permettre à une certaine quantité de lumière d'atteindre le capteur de lumière.

8. Système d'affichage tête haute selon la revendication 7, dans lequel le boîtier du capteur de lumière permet au capteur de lumière de mesurer la luminosité directement derrière l'image virtuelle depuis un point de vue de l'occupant, et où le combineur comprend des matériaux électrochromatiques.

9. Système d'affichage tête haute selon la revendication 8, dans lequel le contrôleur est configuré pour appliquer une tension au combineur pour affecter la quantité de lumière qui est réfléchie par le combineur.
